(19) Europäisches Patentamt / European Patent Office / Office européen des brevets

(11) **EP 3 634 835 B1**

(12) **FASCICULE DE BREVET EUROPEEN**

(45) Date de publication et mention
de la délivrance du brevet:
**06.09.2023   Bulletin 2023/36**

(21) Numéro de dépôt: **18737667.8**

(22) Date de dépôt: **06.06.2018**

(51) Classification Internationale des Brevets (IPC):
**B62D 5/04** *(2006.01)*       **B62D 15/02** *(2006.01)*

(52) Classification Coopérative des Brevets (CPC):
**B62D 15/025; B62D 5/0463**

(86) Numéro de dépôt international:
**PCT/FR2018/051311**

(87) Numéro de publication internationale:
**WO 2018/224778 (13.12.2018 Gazette 2018/50)**

(54) **DISPOSITIF D'ASSISTANCE À LA CONDUITE D'UN VEHICULE AUTOMOBILE DANS UNE VOIE DE CIRCULATION**

ASSISTENZVORRICHTUNG ZUM FAHREN EINES KRAFTFAHRZEUGS IN EINER FAHRSPUR

ASSISTANCE DEVICE FOR DRIVING A MOTOR VEHICLE IN A TRAFFIC LANE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **06.06.2017   FR 1754982**

(43) Date de publication de la demande:
**15.04.2020   Bulletin 2020/16**

(73) Titulaires:
• **Renault s.a.s**
  **92100 Boulogne Billancourt (FR)**
• **Nissan Motor Co., Ltd.**
  **Yokohama-shi, Kanagawa 221-0023 (JP)**

(72) Inventeurs:
• **DALLIER, Emmanuel**
  **78840 Freneuse (FR)**
• **HADDAD, Alain**
  **78310 Maurepas (FR)**

(74) Mandataire: **Renault Group**
  **Renault s.a.s.**
  **1 avenue du Golf**
  **FR TCR AVA 055**
  **78084 Guyancourt Cedex (FR)**

(56) Documents cités:
| | |
|---|---|
| EP-A1- 2 902 301 | EP-A2- 1 950 115 |
| WO-A1-2013/107978 | WO-A1-2017/037374 |
| FR-A1- 3 026 708 | US-A1- 2015 191 200 |
| US-A1- 2015 274 163 | US-A1- 2016 129 933 |
| US-A1- 2018 170 377 | |

EP 3 634 835 B1

**Description**

La présente invention concerne le domaine des dispositifs d'assistance à la conduite d'un véhicule automobile dans une voie de circulation, et plus particulièrement des dispositifs pour maintenir le véhicule dans sa voie de circulation ou pour centrer le véhicule dans sa voie de circulation.

De nos jours, des dispositifs d'assistance à la conduite d'un véhicule automobile dans une voie de circulation sont connus de l'état de la technique. Par exemple, des dispositifs de maintien d'un véhicule automobile dans une voie de circulation sont communément connus sous la dénomination anglo-saxonne « Lane Keeping Assist » ou par l'abréviation correspondante « LKA ». De même, des dispositifs de centrage d'un véhicule automobile dans sa voie de circulation sont communément connus sous la dénomination anglo-saxonne « Lane Centering Assist » ou par l'abréviation correspondante « LCA ». On connaît par exemple le document WO2017/037374 ou encore le document JP2015-128887. Le document US 2018/170377 A1 révèle par ailleurs les caractéristiques du préambule de la revendication 1. décrivant de tels dispositifs

De tels systèmes sont généralement intégrés dans un calculateur du véhicule et en communication d'information avec une caméra et un contrôleur de réseau. Le contrôleur de réseau est un calculateur classiquement incorporé à un véhicule, et est plus communément connu sous la dénomination anglo-saxonne « Controller Area Network » ou par l'abréviation correspondante « CAN ». Ainsi intégré, un dispositif d'assistance à la conduite est capable de corriger une position latérale du véhicule par rapport à sa voie de circulation.

Bien que de tels systèmes soient généralement considérés comme avantageux, ils n'apportent toutefois pas pleinement satisfaction. En effet, de nombreux paramètres agissant sur la fonction de tenue de cap réalisée par le véhicule peuvent causer cette dissymétrie des actions de correction lors de changements d'état de la route. On peut citer comme exemples de tels paramètres l'ensemble des liaisons du véhicule au sol, la géométrie de ces liaisons, les articulations en caoutchouc, les amortisseurs, les pneumatiques, la pression des pneumatiques, les déformations verticales de la chaussée, les dévers de route, les conditions météorologiques comme en particulier l'humidité des contacts ou le vent latéral, le revêtement. Cette liste n'est bien entendu pas exhaustive. Or les systèmes de l'art antérieur calculent une loi de commande en se basant sur ces paramètres qui peuvent évoluer en fonction du temps, tout en les considérant comme fixes. De ce fait, la loi de commande obtenue ne prend pas en compte la variation des paramètres internes et externes du système. Il s'ensuit que la correction générée par le dispositif d'assistance est souvent inefficace.

Pour pallier ces inconvénients, les dispositifs d'assistance de l'art antérieur proposent d'estimer tous les paramètres perturbateurs, afin de les compenser par la suite. Les estimations peuvent être mises en oeuvre au moyen d'observateurs. Toutefois, ces estimations augmentent considérablement la complexité du dispositif.

Au vu de ce qui précède, l'invention a pour but de fournir un dispositif d'assistance à la conduite dans une voie de circulation permettant un contrôle de la trajectoire d'un véhicule automobile adapté à la plupart des conditions de fonctionnement de ce véhicule tout en limitant la complexité du dispositif.

À cet effet, il est proposé un dispositif d'assistance à la conduite dans une voie de circulation pour véhicule automobile, comprenant un module de détermination d'au moins une variable d'entrée choisie parmi des variables relatives au véhicule et des variables relatives à la voie de circulation, un module d'élaboration d'une consigne de correction en fonction de ladite variable d'entrée, et un module d'assistance apte à mettre en oeuvre une action d'assistance à la conduite en fonction de la consigne de correction.

Selon une caractéristique générale de ce dispositif d'assistance, ladite variable d'entrée comprend une position latérale du véhicule dans la voie de circulation et une vitesse de déviation latérale du véhicule.

Du fait de l'utilisation de telles variables d'entrée, l'assistance à la conduite mise en oeuvre par ce dispositif se rapproche de la perception et d'une réaction d'un conducteur humain. En effet, pour observer la déviation de son véhicule, un conducteur se sert de sa vision périphérique, floue mais rapide, davantage que de sa vision fovéale, précise mais lente. Dans le champ de vision périphérique, le conducteur perçoit d'une part la position de son véhicule dans sa voie, et d'autre part la vitesse de déviation latérale du véhicule. Ainsi, le dispositif d'assistance selon l'invention peut mettre en oeuvre l'assistance à la conduite de manière proche à celle de l'être humain dans n'importe quelle situation de fonctionnement, de sorte à gérer au mieux les situations les plus complexes.

De préférence, ladite variable d'entrée comprend en outre au moins une variable choisie parmi une vitesse longitudinale du véhicule, une largeur de la voie de circulation et une largeur du véhicule.

Comme cela sera expliqué par la suite, de telles variables d'entrée peuvent permettre d'affiner l'estimation d'autres variables d'entrée et/ou d'adapter de manière plus précise encore l'action de correction.

Selon un mode de réalisation, le module d'élaboration comprend une cartographie contenant des valeurs de consignes de correction en fonction de la position latérale du véhicule dans la voie de circulation et de la vitesse de déviation latérale du véhicule.

Du fait de l'utilisation d'une telle cartographie, on adapte de manière simple l'action de correction, et ainsi l'assistance à la conduite mise en oeuvre par le dispositif selon l'invention en tenant compte des variables d'entrée.

Selon un autre mode de réalisation, le module de détermination comprend un premier moyen de calcul d'un temps avant franchissement de limite de voie de circulation et le module d'élaboration comprend un second moyen de calcul apte à calculer la consigne de correction en fonction du temps avant le temps de franchissement calculé.

Le calcul d'une telle grandeur est une manière alternative à la cartographie pour adapter l'action de correction. Cette alternative nécessite davantage de ressources de calcul, mais la mémoire associée au dispositif d'assistance pourra être moins importante. Par ailleurs, comme cela sera expliqué par la suite, le calcul de cette grandeur intermédiaire permet d'éviter les discontinuités de la consigne de correction.

Avantageusement, dans l'un quelconque des modes de réalisation précités, le module d'élaboration tient également compte d'une vitesse longitudinale du véhicule.

Selon l'invention, le module d'assistance comprend un correcteur et un moyen de réglage d'au moins un paramètre du correcteur, le signal de consigne élaboré par le module d'élaboration étant un ensemble de paramètres du correcteur.

Une telle disposition fournit un correcteur à commande adaptative, de sorte à permettre l'adaptation de l'action de correction au moyen d'un unique correcteur. On limite ainsi encore davantage la complexité du dispositif d'assistance.

Selon un autre mode de réalisation, le module d'assistance comprend au moins deux correcteurs et un commuteur, le commuteur étant apte à activer l'un desdits correcteurs en fonction de la consigne de correction élaborée.

Avec une telle configuration, le commuteur autorise le choix de correcteurs différents. Cette alternative complique légèrement la structure du dispositif d'assistance selon l'invention, mais permet de limiter le nombre de cartographies incorporées dans ce dernier et de limiter le temps de calcul.

Avantageusement, le module de détermination comprend une caméra apte à détecter au moins une variable mesurée choisie parmi une position de limite de voie de circulation et un cap suivi par le véhicule, et un calculateur capable de déterminer, à partir de ladite variable mesurée, au moins une variable choisie parmi une largeur de voie de circulation et un centre de voie de circulation.

Selon l'invention, le module d'élaboration comprend un moyen d'amortissement destiné à éviter une variation brusque de la consigne de correction, ledit moyen d'amortissement étant capable de filtrer la consigne de correction et/ou de réaliser une rampe entre deux valeurs successives de la consigne de correction.

Avec un tel moyen d'amortissement, on évite l'apparition d'oscillations du volant perceptibles par le conducteur.

Selon l'invention, le module d'élaboration comprend une bascule d'hystérésis.

Une telle bascule peut remplacer ou compléter le moyen d'amortissement. Comme cela sera expliqué par la suite, la bascule d'hystérésis permet aussi d'éviter l'apparition d'oscillations du volant perceptibles par le conducteur.

Selon un autre aspect, il est proposé un procédé d'assistance à la conduite d'un véhicule automobile dans une voie de circulation, dans lequel on mesure une position de limite de voie de circulation et un cap suivi par le véhicule, on détermine au moins une variable d'entrée choisie parmi des variables relatives au véhicule et des variables relatives à la voie de circulation, ladite variable d'entrée comprenant une position latérale du véhicule dans la voie de circulation et une vitesse de déviation latérale du véhicule, on élabore une consigne de correction en fonction de ladite variable d'entrée, et on met en oeuvre une action d'assistance à la conduite en fonction de la consigne de correction.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 est une représentation schématique d'un dispositif d'assistance selon un premier mode de réalisation de l'invention,
- la figure 2 illustre une cartographie incorporée dans le dispositif de la figure 1,
- la figure 3 est un schéma illustrant le fonctionnement du dispositif de la figure 1,
- la figure 4 représente schématiquement un dispositif d'assistance selon un deuxième mode de réalisation de l'invention,
- la figure 5 illustre une cartographie incorporée dans le dispositif de la figure 4,
- la figure 6 est une représentation schématique d'un dispositif d'assistance selon un troisième mode de réalisation de l'invention, et
- la figure 7 illustre une cartographie incorporée dans le dispositif de la figure 6.

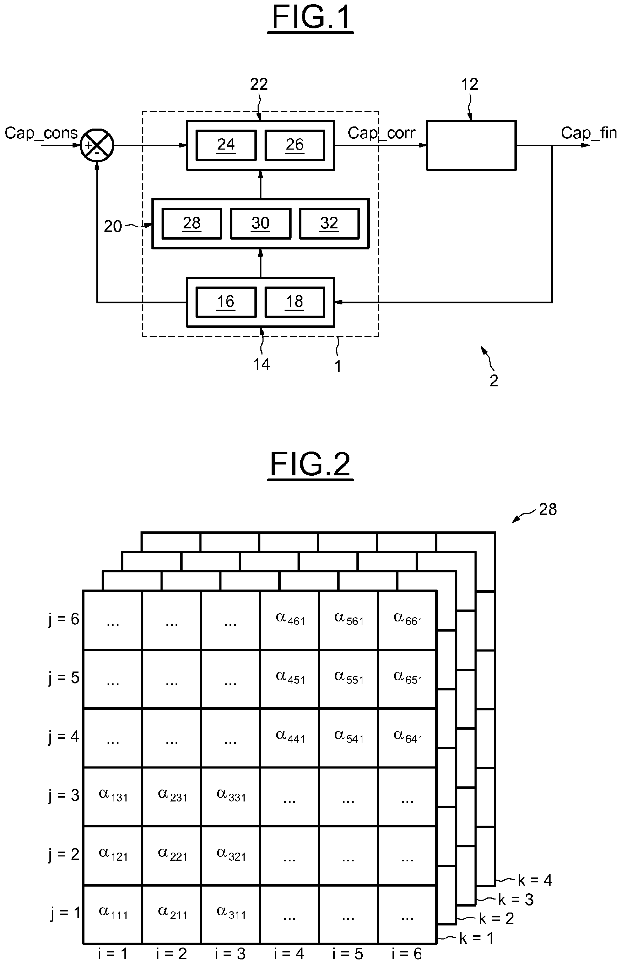

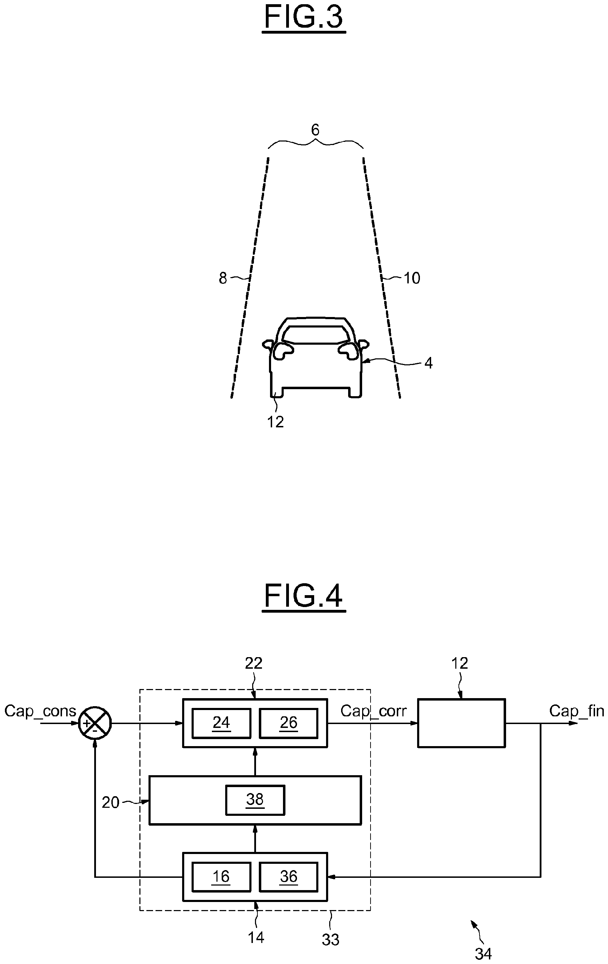

En référence aux figures 1 et 3, un dispositif d'assistance à la conduite dans une voie de circulation 1 selon un premier mode de réalisation de l'invention est destiné à être incorporé dans un véhicule automobile 4 circulant dans une voie de circulation 6. Le dispositif d'assistance 1 est schématiquement représenté sur la figure 1 dans un schéma-bloc 2 illustrant la commande de la position du véhicule 4 dans la voie de circulation 6.

La voie de circulation 6 est latéralement délimitée par deux limites 8 et 10. Dans l'exemple illustré, les limites 8 et 10 sont des lignes blanches discontinues matérialisées sur la chaussée. Toutefois, on ne sort bien évidemment pas du cadre de l'invention en envisageant d'autres exemples de limites de voies de circulation, par exemple des lignes continues, des bords de route ou encore des marqueurs réfléchissants tels que des points de Bott. Le véhicule 4 comprend un système de direction 12. Alternativement, le véhicule comporte plusieurs systèmes de direction comme dans le cas d'un véhicule muni de quatre roues directrices.

En référence à la figure 1, le système de direction 12 est représenté sur le schéma-bloc 2. Le système 12 est capable de transformer un cap corrigé Cap_corr en un cap final Cap_fin du véhicule 4 sur la voie de circulation 6.

Le dispositif d'assistance 1 comporte un module de détermination 14. Dans le mode de réalisation de la figure 1, le module de détermination 14 comprend une caméra 16 et un calculateur 18 en liaison d'information avec la caméra 16. La caméra 16 et le calculateur 18 sont en liaison d'information avec un contrôleur de réseau (non représenté) du véhicule 4.

La caméra 16 est capable de détecter des variables relatives au véhicule 4 et à la voie de circulation 6. En l'espèce, la caméra 16 détecte la position, par rapport au véhicule 4, des limites 8 et 10. La caméra 16 détecte le cap suivi par le véhicule 4 par rapport à la direction des limites 8 et 10.

Le calculateur 18 est capable de calculer la largeur $L_6$ de la voie de circulation 6 à partir de la position des limites 8 et 10 détectée par la caméra 16. Le calculateur 18 est capable de détecter une position du centre (non représenté) de la voie de circulation 6 à partir de la position des limites 8 et 10 détectée par la caméra 16 et de la largeur $L_6$.

Le calculateur 18 est capable de calculer une position latérale $y_{4/6}$ du véhicule 4 dans la voie de circulation 6. Pour ce faire, le calculateur 18 tient compte de la position des limites 8 et 10 détectée par la caméra 16, de la largeur $L_6$ et du centre de la voie de circulation 6. La position $y_{4/6}$ délivrée par le calculateur 18 sera négative si le véhicule 4 est situé entre la limite 8 et le centre de la voie 6, et positive si le véhicule 4 est situé entre la limite 10 et le centre de la voie 6.

Le calculateur 18 est encore capable de calculer une vitesse de déviation latérale $V_{4/6}$ du véhicule 4. Pour ce faire, le calculateur 18 tient compte du cap mesuré par la caméra 16 et d'une vitesse longitudinale $V_{long}$ du véhicule. Le calculateur 18 peut aussi dériver la position latérale $y_{4/6}$ du véhicule pour obtenir la vitesse latérale $V_{4/6}$. De même que pour la position $y_{4/6}$, la vitesse latérale $V_{4/6}$ délivrée par le calculateur 18 est négative si le véhicule se déporte en direction de la limite 8 et positive si le véhicule 4 se déporte en direction de la limite 10.

La vitesse $V_{long}$ est déterminée par des moyens propres au véhicule 4 et recueillie par le calculateur 18 auprès du contrôleur de réseau du véhicule. En outre, le calculateur 18 recueille auprès du contrôleur de réseau la largeur $L_{VEH}$ du véhicule.

Le dispositif d'assistance 1 comporte en outre un module d'élaboration 20. Le module d'élaboration 20 est en communication d'information avec le module de détermination 14. Le module d'élaboration 20 a pour fonction d'élaborer une consigne de correction en tenant compte des variables d'entrée déterminées par le module de détermination 14. La consigne de correction permettra d'adapter l'action de correction aux conditions de fonctionnement du véhicule automobile 4 dans la voie de circulation 6. La structure du module d'élaboration 20 sera expliquée plus en détail par la suite.

Le dispositif d'assistance 1 comporte en outre un module d'assistance 22. Le module d'assistance 22 est en liaison d'information avec le module d'élaboration 20. Le module d'assistance 22 a pour fonction de mettre en oeuvre une action d'assistance à la conduite en tenant compte de la consigne de correction.

Dans le mode de réalisation de la figure 1, le module d'assistance 22 a pour fonction de corriger un écart par rapport à la consigne de cap Cap_cons comme cela est représenté par le schéma-bloc 2. Le dispositif d'assistance 1 intervient donc automatiquement sur le système de direction 12 du véhicule 4. Toutefois, on ne sort pas du cadre de l'invention en envisageant un module d'assistance fournissant une action d'assistance à la conduite d'une autre nature, par exemple en alertant le conducteur par affichage d'une alerte sur le tableau de bord. On peut tout aussi bien prévoir que le module d'assistance comprenne à la fois un moyen pour alerter le conducteur et un moyen pour corriger la direction suivie par le véhicule 4.

Le module d'assistance 22 comprend un correcteur 24. Dans l'exemple de réalisation illustré sur la figure 1, le correcteur 24 est un correcteur proportionnel intégral dérivé (PID). Un tel correcteur a été choisi exprès pour simplifier l'exposé de l'invention. Toutefois, on peut bien entendu envisager sans sortir du cadre de l'invention un autre type de correcteur, en particulier un correcteur plus évolué.

Dans ce mode de réalisation, les trois paramètres $k_i$, $k_p$ et $k_d$ du correcteur PID 24 sont modifiables. Le module d'assistance 22 comprend un moyen de réglage 26 en communication d'information avec le correcteur 24. Plus particulièrement, le moyen de correction 26 est capable de modifier le réglage des paramètres $k_i$, $k_p$ et $k_d$. Pour modifier ces paramètres, le moyen de réglage 26 tient compte du signal de correction délivré par le module d'élaboration 20.

En référence aux figures 1 et 2, le module d'élaboration 20 comprend une cartographie 28. La cartographie 28 est représentée en détail sur la figure 2.

Dans ce mode de réalisation, la cartographie 28 contient des valeurs de consignes de correction en fonction de la position $y_{4/6}$, de la vitesse $V_{4/6}$ et de la vitesse longitudinale $V_{long}$. Les valeurs de consignes de correction sont notées sous la forme $\alpha_{ijk}$, où, en référence à la figure 2 :

- i désigne la position, de la gauche vers la droite, de la colonne dans laquelle doit être rangé $y_{4/6}$,
- j indique la position, du bas vers le haut, de la ligne dans laquelle doit être rangé $V_{4/6}$, et

- k indique le plan dans lequel doit être rangé la vitesse longitudinale $V_{long}$ du véhicule 4.

Plus précisément, dans l'exemple illustré, on répartit les valeurs i dans les colonnes de la cartographie 28 de la manière suivante :

$$\left[ \begin{array}{l} -L_6 \leq y_{4/6} \leq -\dfrac{2}{3} \cdot L_6 \Rightarrow i = 1 \\[2mm] -\dfrac{2}{3} \cdot L_6 < y_{4/6} \leq -\dfrac{1}{6} \cdot L_6 \Rightarrow i = 2 \\[2mm] -\dfrac{1}{6} \cdot L_6 < y_{4/6} \leq 0 \Rightarrow i = 3 \\[2mm] 0 < y_{4/6} \leq \dfrac{1}{6} \cdot L_6 \Rightarrow i = 4 \\[2mm] \dfrac{1}{6} \cdot L_6 < y_{4/6} \leq \dfrac{2}{3} \cdot L_6 \Rightarrow i = 5 \\[2mm] \dfrac{2}{3} \cdot L_6 < y_{4/6} \leq L_6 \Rightarrow i = 6 \end{array} \right.$$

De même, on répartit les valeurs j dans les lignes de la cartographie 28 de la manière suivante :

$$\left[ \begin{array}{l} -\infty < V_{4/6} \leq -V_2 \Rightarrow j = 1 \\[1mm] -V_2 < V_{4/6} \leq -V_1 \Rightarrow j = 2 \\[1mm] -V_1 < V_{4/6} \leq 0 \Rightarrow j = 3 \\[1mm] 0 < V_{4/6} \leq V_1 \Rightarrow j = 4 \\[1mm] V_1 < V_{4/6} \leq V_2 \Rightarrow j = 5 \\[1mm] V_2 < y_{4/6} < +\infty \Rightarrow j = 6 \end{array} \right.,$$

où $V_1$, $V_2$ désignent des seuils prédéfinis.

On répartit les valeurs k dans les plans de la cartographie 28 de la manière suivante :

$$\left[ \begin{array}{l} 0km/h < V_{long} \leq 40km/h \Rightarrow k = 1 \\[1mm] 40km/h < V_{long} \leq 80km/h \Rightarrow k = 2 \\[1mm] 80km/h < V_{long} \leq 120km/h \Rightarrow k = 3 \\[1mm] 120km/h < V_{long} \leq 160km/h \Rightarrow k = 4 \end{array} \right.$$

Dans le mode de réalisation des figures 1 et 2, la consigne de correction $\alpha_{ijk}$ correspond à un triplet $(k_i, k_p, k_d)$. Les valeurs $\alpha_{ijk}$ contenues dans la cartographie 28 sont établies de sorte à rendre l'action de correction rapide, de forte amplitude et stabilisée si :

- l'indice i est éloigné de 3,4 et proche de 1 ou 6, et/ou
- l'indice j est éloigné de 3,4 et proche de 1 ou 6, et/ou

- l'indice k est égal à 3 ou 4.

À l'inverse, la correction sera inexistante ou faible si :

- l'indice i est égal à 3 ou 4, et/ou
- l'indice j est égal à 3 ou 4, et/ou
- l'indice k est égal à 1 ou 2.

En caractérisant la déviation par la vitesse $V_{4/6}$, la position $y_{4/6}$ et la vitesse $V_{long}$, la cartographie 28 adapte l'action de correction ainsi que le ferait un conducteur humain attentif à la situation. Il s'ensuit une adaptation globale de la correction du cap qui permet de prendre en compte toutes les sortes de déviation. En particulier, cette correction tient compte des variabilités des liaisons au sol et de la route, des différentes conditions de roulage, du vent latéral. Le moyen d'élaboration ainsi conçu permet donc d'éviter la création d'observateurs pour chacune des variables, et donc évite d'augmenter la complexité du dispositif 1.

Comme illustré sur la figure 2, les cases correspondant à des valeurs de i compris entre 4 et 6 et j compris entre 1 et 3, ainsi que les cases correspondant à des valeurs de i compris entre 1 et 3 et j compris entre 4 et 6 sont volontairement vides. En effet, dans ces conditions, le véhicule est en cours de repositionnement vers le centre de la voie de circulation 6. En conséquence, on ne corrige pas, ou on corrige faiblement la consigne de cap Cap_cons.

Dans l'exemple illustré, les positions $y_{4/6}$ et les vitesses $V_{4/6}$ sont répertoriés en trois plages négatives et trois plages positives. On ne sort toutefois pas du cadre de l'invention en envisageant un nombre de plages différent. De même, on ne sort pas du cadre de l'invention en envisageant un nombre de plages différent pour répertorier les vitesses $V_{long}$. On peut plus particulièrement choisir le nombre de plages en fonction d'une mémoire disponible allouée à la cartographie 28. On ne sort pas non plus du cadre de l'invention en délimitant les plages par des valeurs seuils différentes.

De nouveau en référence à la figure 1, le moyen d'élaboration 20 comporte un moyen d'amortissement 30. Le moyen d'amortissement 30 est en liaison d'information avec la cartographie 28. Lorsque la consigne de correction passe d'une valeur $\alpha_{ijk}$ à une valeur $\alpha_{i'j'k'}$, ou $(i,j,k) \neq (i',j',k')$, le moyen d'amortissement 30 fait en sorte que la consigne de correction délivrée par la cartographie 28 suive une rampe entre les valeurs $\alpha_{ijk}$ et $\alpha_{i'j'k'}$. Grâce au moyen d'amortissement 30, on évite l'apparition d'oscillations perceptibles par le conducteur. De manière alternative, le moyen d'amortissement 30 peut être doté des moyens matériels et logiciels pour filtrer la consigne de correction au cours du passage entre les valeurs $\alpha_{ijk}$ et $\alpha_{i'j'k'}$. Selon une autre alternative, la cartographie 28 peut être conçue pour pouvoir piloter les passages d'une valeur de consigne à une autre valeur de consigne.

En outre, le module d'élaboration 20 comprend une bascule d'hystérésis 32. La bascule 32 applique une hystérésis aux changements d'état des valeurs i, j et k. On évite ainsi de multiples et incessants changements de la consigne de correction lorsque la position $y_{4/6}$, la vitesse $V_{4/6}$ et/ou la vitesse longitudinale $V_{long}$ sont proches des valeurs de seuil de la cartographie 28. On évite ainsi l'apparition d'oscillations perceptibles par le conducteur dans ces conditions de fonctionnement du véhicule 4.

Dans ce mode de réalisation, la bascule d'hystérésis 32 est fournie en complément du moyen d'amortissement 30 afin que le conducteur ne perçoive en aucun cas des oscillations de la direction du véhicule. Toutefois, le moyen d'élaboration 20 peut comprendre seulement l'un ou l'autre des composants 30 et 32, sans sortir du cadre de l'invention.

En référence à la figure 4, il est schématiquement représenté un dispositif d'assistance à la conduite dans une voie de circulation 33 selon un deuxième mode de réalisation. Le dispositif d'assistance 33 est schématiquement représenté dans un schéma-bloc 34 similaire au schéma-bloc 2 de la figure 1. Les éléments identiques portent les mêmes références.

En référence à la figure 4, le module de détermination 14 comprend un calculateur 36 remplaçant le calculateur 18 du premier mode de réalisation. Comme le calculateur 18, le calculateur 36 est capable de calculer la position latérale $y_{4/6}$, la vitesse de déviation latérale $V_{4/6}$, la largeur $L_6$ et le centre de la voie de circulation 6. En outre, le calculateur 36 est capable de calculer un temps $T_{AVF}$ avant franchissement de limite de voie de circulation. Le temps $T_{AVF}$ correspond à la durée prévisionnelle pour que le véhicule 4, poursuivant sa route sans correction de cap, franchisse l'une des limites 8 et 10. Pour faire ce calcul, le calculateur 36 tient compte de la position $y_{4/6}$, de la vitesse $V_{4/6}$ et de la largeur $L_{VEH}$.

Dans ce mode de réalisation, le moyen d'élaboration 20 comporte une cartographie 38. La cartographie 38 émet une consigne de correction à l'adresse du module d'assistance 22, de laquelle dépendra l'action de correction.

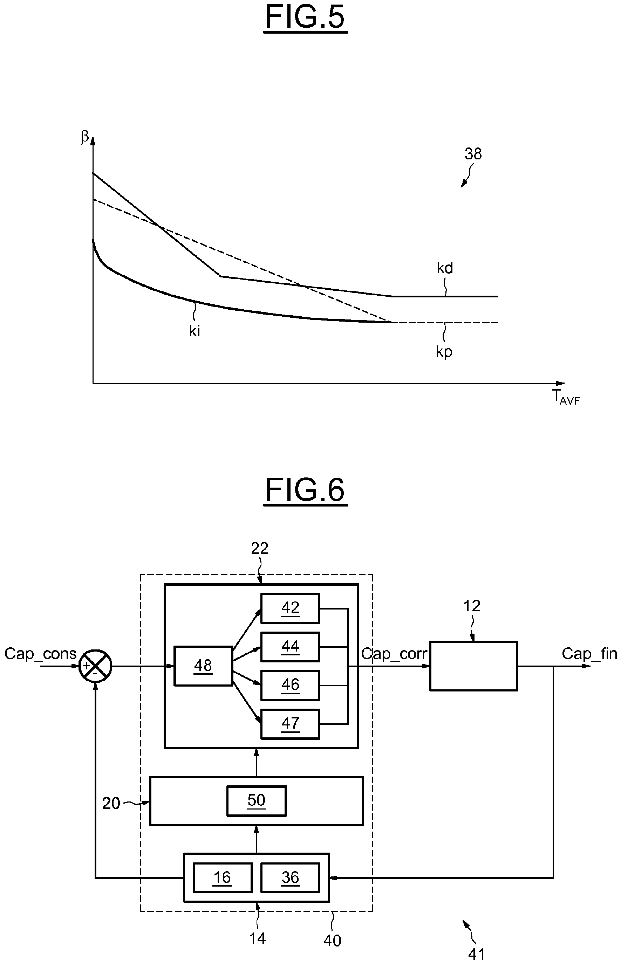

En référence à la figure 5, la cartographie 38 contient des valeurs de consignes de correction β correspondant, comme dans le premier mode de réalisation, à des triplets $(k_i, k_p, k_d)$. La cartographie 38 délivre une valeur de consigne de correction β en fonction du temps $T_{AVF}$.

Ainsi, comme dans le premier mode de réalisation, la cartographie 38 délivre la consigne de correction en fonction d'une variable d'entrée, en l'espèce le temps $T_{AVF}$. Toutefois, la cartographie 38 pourra être moins complexe que la cartographie 28. Un autre avantage de calculer le temps $T_{AVF}$ et d'élaborer la consigne de correction en fonction de $T_{AVF}$ est qu'il est plus facile d'éviter les discontinuités de consigne de correction. En conséquence de cet avantage, le module d'élaboration 20 du dispositif 32 ne comprend pas le moyen d'amortissement 30 ni la bascule d'hystérésis 32 du premier mode de réalisation. Comme dans le premier mode de réalisation, la cartographie 38 peut aussi tenir compte de la vitesse longitudinale $V_{long}$ du véhicule.

En référence à la figure 6, on a schématiquement représenté un dispositif d'assistance à la conduite dans une voie de circulation 40 selon un troisième mode de réalisation de l'invention. Le dispositif d'assistance 40 est schématiquement représenté dans un schéma-bloc 41 similaire au schéma-bloc 34 de la figure 4. Les éléments identiques portent les mêmes références.

Dans ce mode de réalisation, le module d'assistance 22 comporte un premier correcteur 42, un deuxième correcteur 44, un troisième correcteur 46 et un quatrième correcteur 47. Les correcteurs 42, 44, 46 et 47 peuvent être des correcteurs Proportionnel Intégral Dérivé (PID) ou n'importe quel autre type de correcteur, par exemple plus évolué. Plus le chiffre de référence du correcteur 42, 44, 46, 47 est élevé, plus le correcteur entraîne une action de correction rapide, ample et stable. Ainsi, le correcteur 42 entraîne une action de correction confortable, qui est aussi la plus lente, la plus faible et la moins stable. Le correcteur 47 entraîne une action de correction la plus rapide, la plus ample et la plus stable.

Le module d'assistance 22 comporte en outre un commuteur 48. Le commuteur 48 a pour fonction d'activer l'un des correcteurs 42, 44, 46 et 47 en même temps qu'il désactive les autres. Ainsi, lorsque le commuteur 48 sélectionne le correcteur 42, seul le correcteur 42 met en oeuvre l'action de correction de Cap_cons. Pour sélectionner lequel des correcteurs 42, 44, 46 et 47 doit être activé, le commuteur 48 est en liaison d'information avec une cartographie 50 du module d'élaboration 20.

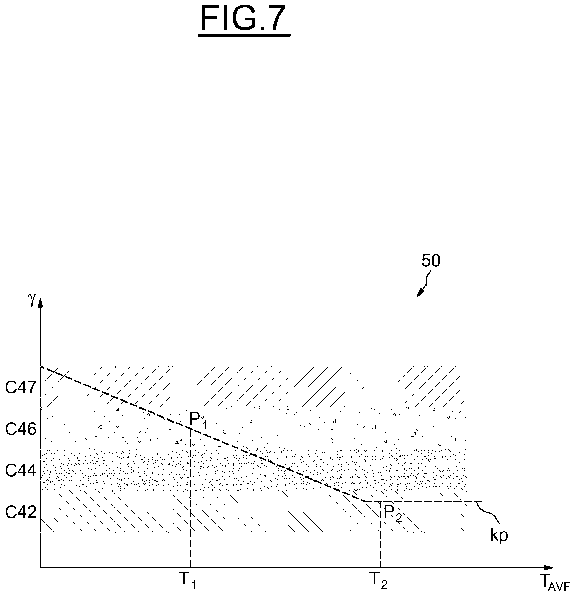

En référence à la figure 7, la cartographie 50 contient des valeurs C42, C44, C46, C47 de consigne d'activation y des correcteurs 42, 44, 46, 47 en fonction du temps $T_{AVF}$. La valeur y délivrée par la cartographie 50 correspond à la zone de l'ordonnée du point de la courbe kp d'abscisse $T_{AVF}$. Ainsi, si $T_{AVF} = T1$ (voir figure 7), l'ordonnée du point de la courbe kp d'abscisse $T_{AVF}$ est située dans la zone du correcteur 46, donc y=C46. Si $T_{AVF} = T2$, l'ordonnée du point de la courbe kp d'abscisse $T_{AVF}$ est située dans la zone du correcteur 42, donc y=C42. Lorsque la cartographie adresse la consigne C42 au commuteur 48, ce dernier active le correcteur 42. Il en est évidemment de même, respectivement, pour les consignes C44, C46 et C47 et les correcteurs 44, 46 et 47. Comme dans les deux premiers modes de réalisation, la cartographie 38 peut aussi tenir compte de la vitesse longitudinale $V_{long}$ du véhicule.

Ainsi, lorsque le temps $T_{AVF}$ est faible, on choisira le correcteur 47 compte tenu du danger de sortie de route. A l'inverse, si le temps $T_{AVF}$ est important, on choisira d'activer le correcteur 47 pour favoriser le confort des occupants du véhicule 4.

Ainsi, dans le troisième mode de réalisation, le dispositif d'assistance 40 calcule le temps $T_{AVF}$ puis adapte l'action de correction en fonction du temps $T_{AVF}$. Le module de détermination 14 est donc identique au module 14 dans le deuxième mode de réalisation. Toutefois, on ne sort pas du cadre de l'invention en modifiant le module de détermination 14 et le module d'élaboration 20, de sorte que la consigne de correction soit élaborée directement en fonction de la position $y_{4/6}$, de la vitesse $V_{4/6}$ et de la vitesse $V_{long}$. Dans ce cas, la cartographie du module d'élaboration est similaire à la cartographie 28 du premier mode de réalisation, à la différence près que les valeurs de consignes contenues dans la cartographie ne sont pas des triplets $(k_i, k_p, k_d)$ mais des consignes d'activation des correcteurs C42, C44, C46 et C47.

Dans l'un quelconque des modes de réalisation qui ont été décrits, il peut en outre être prévu un moyen d'inhibition (non représenté) de l'action de correction. Ce moyen d'inhibition peut être activé en cas de perte de confiance dans les conditions d'activation de l'action de correction, de danger immédiat, de manque de stabilité, de manque de cohérence du dispositif d'assistance.

Au vu de ce qui précède, les trois modes de réalisation de l'invention permettent une adaptation de l'action de correction sans augmenter considérablement la complexité du système. En particulier, le coût d'implémentation de l'invention est particulièrement réduit car il se limite principalement à la mise au point des cartographies.

Dans chacun des trois modes de réalisation, la cartographie est construite de sorte à permettre une identification d'un niveau de criticité d'une déviation du véhicule automobile par rapport à la voie de circulation, de sorte à modifier l'action de correction en fonction de ce niveau de criticité. On adapte de ce fait l'action de correction selon un comportement comparable au comportement d'un conducteur humain, de sorte à améliorer la correction.

## Revendications

1. Dispositif d'assistance (1, 33, 40) à la conduite dans une voie de circulation (6) pour véhicule automobile (4), comprenant un module de détermination (14) d'au moins une variable d'entrée choisie parmi des variables relatives au véhicule et des variables relatives à la voie de circulation, un module d'élaboration (20) d'une consigne de correction ($\alpha_{ijk}$, $\beta$, $\gamma$) en fonction de ladite variable d'entrée, et un module d'assistance (22) apte à mettre en oeuvre une action d'assistance à la conduite en fonction de la consigne de correction ($\alpha_{ijk}$, $\beta$, $\gamma$), ladite variable d'entrée comprend une position latérale ($y_{4/6}$) du véhicule (4) dans la voie de circulation (6) et une vitesse de déviation latérale ($V_{4/6}$) du véhicule (4),

   **caractérisé en ce que** le module d'élaboration (20) comprenant un moyen d'amortissement (30) destiné à éviter une variation brusque de la consigne de correction ($\alpha_{ijk}$), ledit moyen

d'amortissement (30) étant capable de réaliser une rampe entre deux valeurs successives de la consigne de correction ($\alpha_{ijk}$), le module d'élaboration (20) comprenant une bascule d'hystérésis (32),
le module d'assistance (22) comprenant un correcteur (24) et un moyen de réglage (24) d'au moins un paramètre ($k_i$, $k_p$, $k_d$) du correcteur (22), le signal de consigne ($\alpha_{ijk}$, $\beta$) élaboré par le module d'élaboration (20) étant un ensemble de paramètres du correcteur (24).

2. Dispositif (1, 33, 40) selon la revendication 1, dans lequel ladite variable d'entrée comprend en outre au moins une variable choisie parmi une vitesse longitudinale du véhicule ($V_{long}$), une largeur ($L_6$) de la voie de circulation (6) et une largeur ($L_{VEH}$) du véhicule (4).

3. Dispositif (1) selon la revendication 1 ou 2, dans lequel le module d'élaboration (20) comprend une cartographie (28) contenant des valeurs de consignes de correction ($\alpha_{ijk}$) en fonction de la position latérale ($y_{4/6}$) du véhicule (4) dans la voie de circulation (6) et de la vitesse de déviation latérale ($V_{4/6}$) du véhicule (4).

4. Dispositif (33, 40) selon la revendication 1 ou 2, dans lequel le module de détermination (14) comprend un premier moyen de calcul (36) d'un temps avant franchissement de limite de voie de circulation ($T_{AVF}$), le module d'élaboration (20) comprenant un second moyen de calcul (38, 50) apte à calculer la consigne de correction ($\beta$, $\gamma$) en fonction du temps avant franchissement ($T_{AVF}$) calculé.

5. Dispositif (40) selon l'une quelconque des revendications 1 à 4, dans lequel le module d'assistance (22) comprend au moins deux correcteurs (42, 44, 46, 47) et un commuteur (48), le commuteur (48) étant apte à activer l'un desdits correcteurs (42, 44, 46, 47) en fonction de la consigne de correction (y) élaborée.

6. Dispositif (1, 33, 40) selon l'une quelconque des revendications 1 à 5, dans lequel le module de détermination (14) comprend une caméra (16) apte à détecter au moins une variable mesurée choisie parmi une position de limite (8, 10) de voie de circulation (6) et un cap suivi par le véhicule, et un calculateur (18) capable de déterminer, à partir de ladite variable mesurée, au moins une variable choisie parmi une largeur ($L_6$) de voie de circulation (6) et un centre de voie de circulation (6).

7. Dispositif (1) selon l'une quelconque des revendications 1 à 6, dans lequel ledit moyen d'amortissement (30) est capable de filtrer la consigne de correction

($\alpha_{ijk}$).

8. Procédé d'assistance à la conduite d'un véhicule automobile (4) dans une voie de circulation (6), dans lequel on mesure une position de limite (8, 10) de voie de circulation (6) et un cap suivi par le véhicule (4), on détermine au moins une variable d'entrée choisie parmi des variables relatives au véhicule (4) et des variables relatives à la voie de circulation (6), ladite variable d'entrée comprenant une position latérale ($y_{4/6}$) du véhicule (4) dans la voie de circulation (6) et une vitesse de déviation latérale ($V_{4/6}$) du véhicule (4), on élabore une consigne de correction ($\alpha_{ijk}$, $\beta$, $\gamma$) en fonction de ladite variable d'entrée au moyen d'un moyen d'amortissement (30) destiné à éviter une variation brusque de la consigne de correction ($\alpha_{ijk}$), ledit moyen d'amortissement (30) étant capable de réaliser une rampe entre deux valeurs successives de la consigne de correction ($\alpha_{ijk}$), et d'une bascule d'hystérésis (32) et on met en oeuvre une action d'assistance à la conduite en fonction de la consigne de correction ($\alpha_{ijk}$, $\beta$, $\gamma$) au moyen d'un correcteur (24) et d'un moyen de réglage (24) d'au moins un paramètre ($k_i$, $k_p$, $k_d$) du correcteur (22), la consigne de correction étant un ensemble de paramètres du correcteur (24).

**Patentansprüche**

1. Vorrichtung (1, 33, 40) zur Fahrassistenz auf einem Fahrstreifen (6) für ein Kraftfahrzeug (4), die ein Bestimmungsmodul (14) mindestens einer Eingangsvariablen, die aus Variablen bezüglich des Fahrzeugs und Variablen bezüglich des Fahrstreifens ausgewählt wird, ein Erarbeitungsmodul (20) eines Korrektursollwerts ($\alpha_{ijk}$, $\beta$, $\gamma$) abhängig von der Eingangsvariablen, und ein Assistenzmodul (22) enthält, das fähig ist, einen Fahrassistenzvorgang abhängig vom Korrektursollwert ($\alpha_{ijk}$, $\beta$, $\gamma$) durchzuführen, wobei die Eingangsvariable eine seitliche Position ($y_{4/6}$) des Fahrzeugs (4) auf dem Fahrstreifen (6) und eine seitliche Abweichungsgeschwindigkeit ($V_{4/6}$) des Fahrzeugs (4), **dadurch gekennzeichnet, dass** das Erarbeitungsmodul (20) eine Dämpfungseinrichtung (30) enthält, die dazu bestimmt ist, eine abrupte Änderung des Korrektursollwerts ($\alpha_{ijk}$) zu vermeiden, wobei die Dämpfungseinrichtung (30) fähig ist, eine Rampe zwischen zwei aufeinanderfolgenden Werten des Korrektursollwerts ($\alpha_{ijk}$) herzustellen, wobei das Erarbeitungsmodul (20) eine Hysterese-Kippstufe (32) enthält,
wobei das Assistenzmodul (22) einen Regler (24) und eine Einstelleinrichtung (24) mindestens eines Parameters ($k_i$, $k_p$, $k_d$) des Reglers (22) enthält, wobei das vom Erarbeitungsmodul (20) erarbeitete Sollsignal ($\alpha_{ijk}$, $\beta$) eine Einheit von Parametern des Reglers (24) ist.

2. Vorrichtung (1, 33, 40) nach Anspruch 1, wobei die Eingangsvariable außerdem mindestens eine Variable enthält, die unter einer Längsgeschwindigkeit des Fahrzeugs ($V_{long}$), einer Breite ($L_6$) des Fahrstreifens (6) und einer Breite ($L_{VEH}$) des Fahrzeugs (4) ausgewählt wird.

3. Vorrichtung (1) nach Anspruch 1 oder 2, wobei das Erarbeitungsmodul (20) eine Kartierung (28) enthält, die Werte von Korrektursollwerten ($\alpha_{ijk}$) abhängig von der seitlichen Position ($y_{4/6}$) des Fahrzeugs (4) auf dem Fahrstreifen (6) und der seitlichen Abweichungsgeschwindigkeit ($V_{4/6}$) des Fahrzeugs (4) enthält.

4. Vorrichtung (33, 40) nach Anspruch 1 oder 2, wobei das Bestimmungsmodul (14) eine erste Recheneinrichtung (36) einer Zeit vor dem Überschreiten einer Fahrstreifengrenze ($T_{AVF}$) enthält, wobei das Erarbeitungsmodul (20) eine zweite Recheneinrichtung (38, 50) enthält, die fähig ist, den Korrektursollwert ($\beta$, $\gamma$) abhängig von der berechneten Zeit vor dem Überschreiten ($T_{AVF}$) zu berechnen.

5. Vorrichtung (40) nach einem der Ansprüche 1 bis 4, wobei das Assistenzmodul (22) mindestens zwei Regler (42, 44, 46, 47) und einen Schalter (48) enthält, wobei der Schalter (48) fähig ist, einen der Regler (42, 44, 46, 47) abhängig vom erarbeiteten Korrektursollwert (y) zu aktivieren.

6. Vorrichtung (1, 33, 40) nach einem der Ansprüche 1 à 5, wobei das Bestimmungsmodul (14) eine Kamera (16), die geeignet ist, mindestens eine gemessene Variable zu erkennen, die aus einer Grenzposition (8, 10) des Fahrstreifens (6) und einem vom Fahrzeug verfolgten Kurs ausgewählt wird, und einen Rechner (18) enthält, der fähig ist, ausgehend von der gemessenen Variablen mindestens eine Variable zu bestimmen, die aus einer Breite ($L_6$) eines Fahrstreifens (6) und einer Mitte eines Fahrstreifens (6) ausgewählt wird.

7. Vorrichtung (1) nach einem der Ansprüche 1 bis 6, wobei die Dämpfungseinrichtung (30) fähig ist, den Korrektursollwert ($\alpha_{ijk}$) zu filtern.

8. Fahrassistenzverfahren eines Kraftfahrzeugs (4) auf einem Fahrstreifen (6), wobei eine Grenzposition (8, 10) eines Fahrstreifens (6) und ein vom Fahrzeug (4) verfolgter Kurs gemessen werden, wobei mindestens eine Eingangsvariable bestimmt wird, die aus Variablen bezüglich des Fahrzeugs (4) und Variablen bezüglich des Fahrstreifens (6) ausgewählt wird, wobei die Eingangsvariable eine seitliche Position ($y_{4/6}$) des Fahrzeugs (4) auf dem Fahrstreifen (6) und eine seitliche Abweichungsgeschwindigkeit ($V_{4/6}$) des Fahrzeugs (4) enthält, wobei ein Korrektursollwert ($\alpha_{ijk}$, $\beta$, $\gamma$) abhängig von der Eingangsvariablen mittels einer Dämpfungseinrichtung (30), die dazu bestimmt ist, eine abrupte Änderung des Korrektursollwerts ($\alpha_{ijk}$) zu vermeiden, wobei die Dämpfungseinrichtung (30) fähig ist, eine Rampe zwischen zwei aufeinanderfolgenden Werten des Korrektursollwerts ($\alpha_{ijk}$) zu erarbeiten, und einer Hysterese-Kippstufe (32) erarbeitet wird, und ein Fahrassistenzvorgang abhängig vom Korrektursollwert ($\alpha_{ijk}$, $\beta$, $\gamma$) mittels eines Reglers (24) und einer Einstelleinrichtung (24) mindestens eines Parameters ($k_i$, $k_p$, $k_d$) des Reglers (22) durchgeführt wird, wobei der Korrektursollwert eine Einheit von Parametern des Reglers (24) ist.

**Claims**

1. Driving assistance device (1, 33, 40) for a motor vehicle (4) in a traffic lane (6), comprising a module (14) for determining at least one input variable chosen from among variables relating to the vehicle and variables relating to the traffic lane, a module (20) for generating a correction setting ($\alpha_{ijk}$, $\beta$, $\gamma$) as a function of said input variable, and an assistance module (22) suitable for implementing a driving assistance action as a function of the correction setting ($\alpha_{ijk}$, $\beta$, $\gamma$), said input variable comprising a lateral position ($y_{4/6}$) of the vehicle (4) in the traffic lane (6) and a lateral deviation speed ($V_{4/6}$) of the vehicle (4),

   **characterized in that** the generation module (20) comprises a damping means (30) intended to avoid an abrupt variation of the correction setting ($\alpha_{ijk}$), said damping means (30) being capable of producing a ramp between two successive values of the correction setting ($\alpha_{ijk}$), the generation module (20) comprising a hysteresis trigger (32),
   the assistance module (22) comprising a corrector (24) and a means (24) for adjusting at least one parameter ($k_i$, $k_p$, $k_d$) of the corrector (22), the setting signal ($\alpha_{ijk}$, $\beta$) generated by the generation module (20) being a set of parameters of the corrector (24).

2. Device (1, 33, 40) according to Claim 1, in which said input variable additionally comprises at least one variable chosen from among a longitudinal speed of the vehicle ($V_{long}$), a width ($L_6$) of the traffic lane (6) and a width ($L_{VEH}$) of the vehicle (4) .

3. Device (1) according to either Claim 1 or Claim 2, in which the generation module (20) comprises a mapping (28) containing values of correction settings ($\alpha_{ijk}$) as a function of the lateral position ($y_{4/6}$) of the vehicle (4) in the traffic lane (6) and of the lateral deviation speed ($V_{4/6}$) of the vehicle (4).

4. Device (33, 40) according to either Claim 1 or Claim 2, in which the determination module (14) comprises a first calculation means (36) for calculating a time before the crossing of the traffic lane boundary ($T_{AVF}$), the generation module (20) comprising a second calculation means (38, 50) suitable for calculating the correction setting ($\beta$, $\gamma$) as a function of the calculated time before the crossing ($T_{AVF}$).

5. Device (40) according to any one of Claims 1 to 4, in which the assistance module (22) comprises at least two correctors (42, 44, 46, 47) and a switch (48), the switch (48) being suitable for activating one of said correctors (42, 44, 46, 47) as a function of the generated correction setting ($\gamma$).

6. Device (1, 33, 40) according to any one of Claims 1 to 5, in which the determination module (14) comprises a camera (16) suitable for detecting at least one measured variable chosen from among a position of a boundary (8, 10) of the traffic lane (6) and a heading followed by the vehicle, and a computer (18) capable of determining, from said measured variable, at least one variable chosen from among a width ($L_6$) of the traffic lane (6) and a centre of the traffic lane (6).

7. Device (1) according to any one of Claims 1 to 6, in which said damping means (30) is capable of filtering the correction setting ($\alpha_{ijk}$).

8. Driving assistance method for a motor vehicle (4) in a traffic lane (6), in which a boundary position (8, 10) of the traffic lane (6) and a heading followed by the vehicle (4) are measured, at least one input variable chosen from among variables relating to the vehicle (4) and variables relating to the traffic lane (6) is determined, said input variable comprising a lateral position ($y_{4/6}$) of the vehicle (4) in the traffic lane (6) and a lateral deviation speed ($V_{4/6}$) of the vehicle (4), a correction setting ($\alpha_{ijk}$, $\beta$, $\gamma$) is generated as a function of said input variable by means of a damping means (30) intended to avoid an abrupt variation of the correction setting ($\alpha_{ijk}$), said damping means (30) being capable of producing a ramp between two successive values of the correction setting ($\alpha_{ijk}$), and of a hysteresis trigger (32), and a driving assistance action is implemented as a function of the correction setting ($\alpha_{ijk}$, $\beta$, $\gamma$) by means of a corrector (24) and of a means (24) for adjusting at least one parameter ($k_i$, $k_p$, $k_d$) of the corrector (22), the correction setting being a set of parameters of the corrector (24).

# FIG.1

# FIG.2

# FIG.3

# FIG.4

# FIG.5

# FIG.6

# FIG.7

**EP 3 634 835 B1**